(19) Europäisches Patentamt
European Patent Office
Office européen des brevets

(11) **EP 1 647 745 B1**

(12) **EUROPÄISCHE PATENTSCHRIFT**

(45) Veröffentlichungstag und Bekanntmachung des Hinweises auf die Patenterteilung:
**15.12.2010 Patentblatt 2010/50**

(51) Int Cl.:
***F16J 15/16*** *(2006.01)*

(21) Anmeldenummer: **05021573.0**

(22) Anmeldetag: **01.10.2005**

(54) **Dichtungsanordnung**

Sealing arrangement

Dispositif d'étanchété

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **15.10.2004 DE 102004050584**

(43) Veröffentlichungstag der Anmeldung:
**19.04.2006 Patentblatt 2006/16**

(73) Patentinhaber: **GAPI Technische Produkte Gmbh 51503 Rösrath (DE)**

(72) Erfinder: **Meller, Dieter 53347 Alfter (DE)**

(74) Vertreter: **Gudat, Axel Lippert, Stachow & Partner Frankenforster Strasse 135-137 51427 Bergisch Gladbach (DE)**

(56) Entgegenhaltungen:
| | |
|---|---|
| EP-A- 1 437 536 | FR-A- 589 386 |
| SE-B- 308 842 | US-A- 2 420 104 |
| US-A- 2 462 586 | US-A- 3 455 566 |
| US-A- 3 630 532 | US-A- 4 681 327 |
| US-A- 4 699 387 | US-B1- 6 502 826 |

EP 1 647 745 B1

## Beschreibung

Die Erfindung betrifft eine Dichtungsanordnung mit einem elastischen Dichtring, wobei der Dichtring in einer um den Innen- oder Außenumfang eines ersten Bauteils umlaufenden Nut angeordnet ist, wobei die Nut zwei gegenüberliegende Nutflanken und einen Nutgrund aufweist und der Dichtring abdichtend an zumindest einer Nutflanke und/oder dem Nutgrund anliegt, wobei der Dichtring abdichtend zwischen dem ersten und einem zweiten Bauteil angeordnet ist unter Querschnittsdeformation im Einbauzustand in der Nut verpresst ist, wobei ferner ein Stützring vorgesehen ist, der mit einer Dichtfläche abdichtend an dem Dichtring und mit einer gegenüberliegenden Stützfläche abstützend an einer stützringseitigen Nutflanke anliegt, und wobei der Dichtring wenigstens zwei Dichtbereiche mit bogenförmigen Querschnitt aufweist, die dem Nutgrund und dem Stützring zugewandt sind, und wobei ferner die Nut einen im Wesentlichen dreieckigen Querschnitt mit einer den Nutgrund bildenden Querschnittsecke aufweist, wobei zumindest die stützringseitige Nutflanke schräg zur Dichtringachse gestellt ist, und wobei der Stützring einen im Wesentlichen dreieckigen Querschnitt und in Montagerichtung eine geringere Höhe als der Abstand des Nutgrundes von dem zweiten Bauteil aufweist und wobei der Stützring durch den verpressten Dichtring in seiner Lage an dem abzudichtenden Spalt zwischen dem ersten und dem zweiten Bauteil positioniert wird.

Derartige Dichtungsanordnungen werden oftmals als Wellen- oder Kolbendichtung eingesetzt, wobei der Dichtring zumeist als O-Ring ausgebildet ist. Der sich zwischen dem ersten und dem zweiten Bauteil ergebende Dichtspalt wird hierbei teilweise durch den Stützring abgedeckt, um eine Extrusion des Dichtringes durch den Spalt bei hohen Temperaturen und hohen, insbesondere schwankenden, Drücken zu verhindern. Die den Dichtring aufnehmende Nut des ersten Bauteils ist hierbei im Wesentlichen als Rechtecknut ausgebildet. Trotz der Anordnung der Stützringe besteht nach wie vor das Bedürfnis, eine Extrusion des Dichtringes bei hohen Drücken und Temperaturen durch den abzudichtenden Spalt zwischen den beiden Bauteilen zuverlässig zu verhindern.

Ferner besteht nach wie vor das Bedürfnis, die Lebensdauer des Dichtringes auch bei schwankenden Drücken zu erhöhen, da durch die dynamische Belastung der Dichtring starken und nur schwer theoretisch zu erfassenden Wechselbeanspruchungen ausgesetzt wird, die letztlich zu einer Ermüdung des Dichtringmaterials führt. Hierdurch wird die Dichtwirkung des Dichtringes herabgesetzt und eine Extrusion desselben durch den Spalt erleichtert.

Ferner muss bei herkömmlichen Dichtungsanordnungen durch aufwändige Nachbearbeitung des Dichtringes eine ausreichende Oberflächenqualität erzeugt werden, um die erforderliche Zuverlässigkeit der Dichtungsanordnung zu gewährleisten. Die Entgratung des Dichtringes ist hierbei ein wesentlicher Verfahrensschritt, der sehr aufwändig unter Tiefkühlung des Dichtringes erfolgen muss und die Herstellungskosten wesentlich mitbestimmt.

Die US-A-2 462 586 beschreibt eine gattungsgemäße Dichtungsanordnung, wobei die Nut einen im Wesentlichen dreieckigen Querschnitt aufweist, wobei die beiden Nutflanken winkelig in den Nutgrund übergehen. Der Dichtungsring liegt in Einbaulage an dem Nutgrund und dem zweiten, dem Nutgrund gegenüberliegenden, Bauteil an und ist von den beiden Nutflanken beabstandet.

Der Erfindung liegt somit die Aufgabe zugrunde, eine Dichtungsanordnung mit Stützring zu schaffen, bei welcher eine Extrusion des Stützringes durch den zwischen den beiden abzudichtenden Bauteilen vorgesehenen Spalt erschwert wird, wobei die Lebensdauer des Dichtringes erhöht ist und in welcher weniger aufwändig herzustellende Dichtringe bei zumindest gleicher Dichtigkeit und Zuverlässigkeit der Dichtungsanordnung einsetzbar sind. Ferner ist es Aufgabe, einen entsprechenden Stützring bereitzustellen.

Die Aufgabe wird erfindungsgemäß durch eine Dichtungsanordnung gelöst, bei welcher der Nutgrund im Querschnitt bogenförmig mit einem Radius ausgeführt ist, der zumindest in etwa gleich dem Krümmungsradius des gegenüberliegenden Dichtringbereichs bei demontiertem Dichtring oder größer als dieser ist, was bei lose eingelegtem Dichtring gilt. Im Falle eines kreisförmigen Dichtringquerschnittes gilt dies entsprechend für den Querschnittsradius.

Der Stützring weist einen im Wesentlichen dreieckigen Querschnitt und eine geringere Höhe als der Abstand des Nutgrundes von dem zweiten Bauteil auf und liegt flächig an der Nutstützflanke an, wobei der Stützring in seiner Solllage an dem abzudichtenden Spalt zwischen dem ersten und dem zweiten Bauteil positioniert wird. Die Positionierung bezieht sich auf die montierte Dichtungsanordnung mit verpresstem Dichtring, insbesondere auf die bestimmungsgemäßen Betriebsbedingungen der zugeordneten Einrichtung oder Maschine.

Durch Ausbildung der Nut und des Stützring mit im Wesentlichem dreieckigen Querschnitt kann der Stützring durch die Verpressung des Dichtringes unter Querschnittsänderung beim Einbau zwischen den beiden Bauteilen exakt definiert an dem zu überbrückenden Spalt positioniert werden. Dichtring und Stützring zentrieren sich somit gegenseitig und zwingen einander in Einbaulage in eine bestimmte Position. Auch bei unterschiedlichen Betriebsbedingungen wie Temperaturen oder Drücken, bei welchen der zwischen den Bauteilen verpresste Dichtring jeweils eine etwas unterschiedliche Querschnittsgeometrie aufweisen kann, wird somit der Stützring stets in seiner optimalen Lage positioniert und verhindert hierdurch sowohl eine Extrusion des Dichtringes durch den abzudichtenden Spalt zwischen den beiden Bauteilen und bedingt zudem, dass der Dichtring jeweils über eine größtmögliche Fläche unter größtmöglicher Anpassung an die Querschnittsgestalt der Dichtringes abgestützt wird. Hierdurch wird eine Walkarbeit des Dichtringes bei schwankenden Drücken oder unerwünscht Quetschungen des Dichtringes, die zu Materialermüdungen führen, vermieden, wodurch die Lebensdauer des Dichtringes beträchtlich erhöht wird.

Durch die Schrägstellung der stützringseitigen Nutflanke gegenüber der Dichtringachse, durch welche sich die Nut vom Nutgrund zum gegenüberliegenden Bauteil hin aufweitet, ist der Stützring zumindest um ein gewisses Ausmaß zum Nutgrund bzw. zum zweiten Bauteil hin verschiebbar, was bei montierter Dichtungsanordnung gegebenenfalls unter geringfügiger Verdrängung des Dichtringes erfolgen kann. Die als Kegelstumpfmantelfläche ausgeführte Nutflanke erstreckt sich somit mit konstanter Neigung zur Stützring- bzw. Dichtringsachse bis zumindest im Wesentlichen an den abzudichtenden Spalt heran. Die radiale Erstreckung der stützringseitigen Nutflanke ist hierbei vorzugsweise größer als die radiale Erstreckung des Stützringes. Die Nutflanke wirkt somit als eine Art Gleitebene für den Stützring unter dessen dynamischer Belastung und damit auch dynamischer Aufweitung, wobei der Stützring stets flächig, vorzugsweise vollflächig, an der stützringseitigen Nutflanke anliegt.

Es versteht sich, dass der Dichtring ein durchgehender, umfänglich geschlossener Dichtring ist, wohingegen der Stützring bei einer gewissen (sehr geringen) Elastizität ein umfänglich geschlossener Ring sein kann, vorzugsweise aber eine eine Aufweitung des Stützringes erleichternde Durchtrennung oder Materialschwächung vorgesehen ist. Die Durchtrennung des Stützringes kann insbesondere unter Ausbildung von in Richtung der Stützringachse hintereinander angeordnete Trennbereiche ausgebildet sein, die im Einbauzustand einander überlappen und durch den Dichtring aneinander gepresst werden und so in Art eines Schlosses wirken. Die Elastizität des Dichtringes, z.B. bestimmt nach dem Elastizitätsmodul, ist vorzugsweise ein mehrfaches oder 1 bis 2 oder mehr Zehnerpotenzen höher als die des Stützringes. Der Stützring ist so auch bei sehr hohen bestimmungsgemäßen Drücken bezogen auf seine Querschnittsgestalt zumindest im wesentlichen oder vollständig formstabil und lediglich in dem sehr geringen Ausmaß aufweitbar, um eine stets vollflächige Anlage an der stützringseitigen Nutflanke bereitzustellen. Der Dichtring würde bei stützringloser Anordnung unter denselben Bedingungen eine sehr starke Walkarbeit und Bewegung innerhalb der Nut unter Querschnittsänderung durchführen.

Die Verpressung des Dichtringes unter einer Querschnittsdeformation desselben erfolgt, da der in der Nut angeordnete Dichtring einen größeren Außendurchmesser aufweist als der Abstand des Nutgrundes von dem zweiten Bauteil, so dass beim Einbau der Dichtring in der Dichtringebene zusammengequetscht und in Richtung der Dichtringachse verbreitert wird. Der Dichtring ist hierbei unter den jeweiligen Betriebsbedingungen zumindest im Wesentlichen oder vollständig inkompressibel.

Vorzugweise weist der Dichtring neben den beiden bogenförmigen Dichtflächen, welche dem Nutgrund bzw. Stützring zugewandt und mit diesem dichtend zur Anlage kommen, einen weiteren bogenförmigen Querschnittsbereich auf der dem Stützring gegenüberliegenden Seite auf. Vorzugsweise ist der Dichtring bezogen auf die Dichtringebene, welche senkrecht zur Dichtringachse steht, symmetrisch ausgebildet. Besonders bevorzugt weist der Dichtring einen kreisförmigen Querschnitt auf. Der Dichtring ist vorzugsweise als O-Ring ausgebildet.

Vorzugsweise ist die Nut bezüglich der Hauptebene, in welcher der Nutgrund verläuft, symmetrisch ausgeführt, gegebenenfalls können jedoch auch beide Nutflanken einen dem Betrag nach unterschiedlichen Anstellwinkel gegenüber der Dichtringachse aufweisen.

Die stützringseitige Nutflanke der den Dichtring aufnehmenden Nut steht vorzugsweise mit einem Winkel von 30° bis 60°, besonders bevorzugt ca. 45° schräg zur Dichtringachse, wobei sich hierdurch die Nut jeweils zur offenen Nutseite hin erweitert. Durch eine derartige Winkelbemessung kann der Stützring wirksam durch den Dichtring zentriert und zugleich an die Nutstützflanke angedrückt werden. Vorzugsweise erstreckt sich diese Nutflanke im Querschnitt linear vom Nutgrund weg und entspricht einer kegelstumpfförmigen Mantelfläche.

Ist einer der Nutflanken kein Stützring zugeordnet, so kann diese Nutflanke eine andere Geometrie aufweisen, vorzugsweise sind beide Nutflanken als Kegelstumpfmantelflächen ausgebildet, die vorzugsweise beide bis zu oder bis zumindest nahezu an den abzudichtenden Spalt erstrecken.

Vorzugsweise ist ferner der Nutgrund derart ausgeführt, dass der Dichtring in lose eingelegtem Zustand, d.h. ohne Verpressung und Querschnittsänderung durch Zusammenbau mit dem zweiten Bauteil, mit einem Umfangswinkel von ca. 45° bis ca. 120° oder 140°, vorzugsweise ca. 60° bis ca. 120°, besonders bevorzugt ca. 90°, an dem Nutgrund anliegt. Hierdurch wird der Dichtring von dem Nutgrund über einen großen Umfangswinkel des Dichtringquerschnittes flächig anliegend umfasst, wodurch eine hohe Dichtigkeit der Dichtanordnung und andererseits eine exakte Positionierung des Dichtringes erfolgt. Es versteht sich, dass generell der Dichtring bei lose in die Nut eingelegtem Zustand unter Vorspannung oder ohne Vorspannung an dem ersten Bauteil anliegen kann, dies erfolgt jedoch ohne Querschnittsveränderung bezogen auf den demontierten Zustand.

Besonders bevorzugt liegt der Dichtring in lose in die Nut eingelegtem Zustand und/oder im verpressten Zustand durchgehend am Nutgrund und bereichsweise an den beiden sich an den Nutgrund anschließenden Nutflanken an, so dass der Dichtring beidseitig des Nutgrundes von den Nutflanken gegen eine Verschiebung oder Deformation gesichert ist. Gegebenenfalls kann der Dichtring auch bei lose in die Nut eingelegtem Zustand nur am Nutgrund und im wesentlichen einseitig, auf einer einem Stützring zu- oder abgewandten Seite, an der Nutwandung unter Ausbildung eines flächigen Dichtbereiches an dem ersten Bauteil anliegen.

Vorzugsweise wird der Dichtring bei lose eingelegtem, d. h. unverpresstem, Zustand über einen Umfangswinkel von größer/gleich 45°, vorzugsweise größer/gleich 60° oder 90° von der Nut und/oder dem Stützring unter abdichtender Anlage umschlossen, so dass der Krümmungsradius des Abdichtbereichs von Nut und/oder Stützring dem Krümmungsradius des Dichtringes entsprich. Ist nur ein Stützring vorgesehen, wie unten beschrieben, so kann der Dichtring über einen Umfangswinkel von größer/gleich 120°, vorzugsweise 180° oder größer von Nut und Stützring umschlossen sein, deren Anlageflächen einen Krümmungsradius aufweisen, wie die Anlagefläche des lose in die Nut eingelegten Dichtringes, insbesondere dem Dichtringradius entsprechen.

Ferner ist es bevorzugt, dass der zwischen den beiden Nutflanken eingeschlossene Winkel im Bereich des Nutgrundes ca. 60° bis ca. 120°, vorzugsweise ca. 90° bis 100°, insbesondere ca. 90° beträgt.

Um sowohl eine Extrusion des Dichtringes zu verhindern als auch dessen Lebensdauer zu erhöhen, hat es sich als besonders vorteilhaft erwiesen, wenn die dem Dichtring gegenüberliegende Dichtfläche des Stützringes eingebaucht ist. Hierdurch kann der durch den Druck des abzudichtenden fluiden Mediums gegen den Stützring gedrückte Dichtring besonders wirksam von dem Stützring in seiner Solllage gehalten werden, wobei auch bei schwellenden Drücken eine Walkarbeit des Dichtringes besonders wirksam vermieden werden kann.

Eine besonders hohe Lebensdauer der Dichtungsanordnung bei hoher Dichtigkeit eine Verringerung der Neigung zur Extrusion wird erzielt, wenn die Stützringeinbauchung zumindest im Wesentlichen stetig in den angrenzenden Dichtbereich der Nut übergeht. Die Stützringeinbauchung kann hierbei in einen Bereich der Nutflanke übergehen, der sich zumindest im Wesentlichen tangential zu dem Übergangsbereich der Stützringeinbauchung erstreckt. Die Stützringeinbauchung kann alternativ auch in den Nutgrund übergehen, der im Übergangsbereich zu dem Stützring zumindest im Wesentlichen den gleichen Krümmungsradius wie dieser hat. Ungleichförmige Anlageflächen mit drastischen Änderungen der Anstellwinkel der Anlageflächen für den Dichtring werden so vermieden. Hierdurch sind die Dichtflächen an den Dichtring angepasst und ungleichmäßige Druckverteilungen im Dichtring die insbesondere bei schwankenden Drucken zu Materialermüdungen führen, werden vermieden.

Die Krümmung der Einbauchung des Stützringes kann zumindest in etwa gleich der Krümmung des gegenüberliegenden Dichtringbereichs in demontiertem bzw. nur lose in die Nut eingelegtem Zustand und/oder im verpressten Zustand des Dichtring sein. Dies kann insbesondere gelten, wenn die Krümmung der Einbauchung und des Dichtringbereichs kreisbogenförmig sind.

Dies kann ferner insbesondere gelten, wenn der Dichtring nur einseitig von einem Stützring abgestützt wird. Der Krümmungsradius der Stützringeinbauchung kann auch kleiner, vorzugsweise nur geringfügig kleiner, als der Krümmungsradius des gegenüberliegenden Dichtringbereichs in demontiertem bzw. lose eingelegtem Zustand des Dichtringes sein. In verpresstem Zustand sind die beiden Krümmungsradien dann vorzugsweise zumindest annähernd gleich groß. Dies kann insbesondere gelten, wenn der Dichtring beidseitig von Stützringen umgeben ist. Die Stützringeinbauchung ist jeweils vorzugsweise kreisbogenförmig, sie kann auch eine andere bogenförmige Gestalt aufweisen, beispielsweise eine im Wesentlichen elliptische Querschnittsgestalt. Besonders bevorzugt entspricht der Krümmungsradius der Stützringeinbauchung jeweils dem Dichtringquerschnittsradius des demontierten Dichtringes.

Vorzugsweise ist der Krümmungsradius der dem Dichtring gegenüberliegenden Stützringeinbauchung ca. 5 bis 20% oder bis 25% kleiner als der Krümmungsradius des Dichtringes, besonders bevorzugt ca. 10 bis 15% kleiner als dieser. Als besonders vorteilhaft erwiesen hat es sich, wenn für die Radien $R1$ des dem Stützring gegenüberliegenden Dichtringbereichs bzw. Querschnittsradius eines Dichtringes und dem Radius $R2$ der dem Dichtring gegenüberliegenden Einbuchtung des Stützringes folgende Beziehung gilt:

$$R2 = (2 \times R1 + LQ) / 4$$

mit

$$LQ = \sqrt{2} \times R1$$

$LQ$ ist hierbei die Kantenlänge eines Quadrates, dessen Einhüllende der Dichtringquerschnitt ist.

Für das Verhältnis $R2 : R1$ gilt somit vorzugsweise $R2 = 0,85\,R1$. Vorzugsweise weicht das Verhältnis $R2 / R1$ von dem oben genannten Idealwert um nicht mehr als 15%, vorzugsweise nicht mehr als 10%, besonders bevorzugt nicht mehr als 2 bis 5% ab.

Vorzugsweise entspricht der Abstand $S(R2)$ des Krümmungsmittelpunktes der Stützringeinbauchung von dem Krümmungsmittelpunkt der dem Stützring gegenüberliegenden Dichtringwölbung bzw. dem Dichtringmittelpunkt ca. dem 0,25 bis 0,45-fachen, vorzugsweise dem 0,3 bis 0,4-fachen, besonders bevorzugt dem ca. 0,35-fachen Radius der Dichtringkrümmung. Hierdurch ist bei montierter Dichtungsanordnung eine Anordnung von Dichtring und Stützring geschaffen, bei welcher der Dichtring besonders wirksam an einer Walkarbeit gehindert und dadurch die Lebensdauer des Dichtringes erhöht wird (die Verhältnisse von $R1:R2$ und der Wert für $S(R2)$ gelten jeweils für den lose in die Nut eingelegten Dichtring).

Vorzugsweise beträgt die radiale Höhe des Stützringes ca. 40 bis ca. 80%, vorzugsweise ca. 50 bis ca. 75% der radialen Nuttiefe und/oder des Abstandes des Nutgrundes von dem zweiten Bauteil.

Ferner liegen vorzugsweise die radial innen und radial außenliegende Begrenzung der dichtringseitigen Dichtfläche des Stützringes in einer Ebene, die zumindest im Wesentlichen parallel zu der Dichtringhauptebene liegt.

Die Dichtringanordnung ist ferner vorzugsweise derart ausgeführt, dass die Kompression des Dichtringes bei Zusammenbau der Dichtungsanordnung, die eine Verminderung des effektiven Durchmessers des Dichtringes insgesamt bedingt, in etwa oder genau der Dichtringhöhe entspricht, welche von einem eingeschriebenen Quadrat, welches von dem Dichtringquerschnitt eingehüllt wird und bei dem vorzugsweise alle Eckpunkte an dem Kreisbogen anliegen, übersteht. Hierdurch ergeben sich durch den Einbau des Dichtringes Querschnittsänderungen, die besonders einfach quantitativ erfasst werden können, so dass der Stützring, insbesondere dessen eingebauchte Dichtringseite, auf einfache Weise optimal ausgeführt werden können. Vorzugsweise weicht die Höhe des verpressten Dichtringes im Einbauzustand von dem oben angegebenen Idealwert, der durch die Kantenlänge des eingeschriebenen Quadrates bestimmt wird, nicht mehr als 10 bis 15%, vorzugsweise nicht mehr als 2 bis 5% ab.

Der Dichtring kann in seinem eingebauten Zustand um mehr als 3-5%, vorzugsweise ca. 10 bis 20% oder evt. auch mehr, besonders vorzugsweise ca. 15% gegenüber seinem lose in die Nut eingelegtem Zustand in seinem Durchmesser gestaucht sein.

Vorzugsweise sind Dichtring und Stützring derart ausgeführt, dass im eingebauten Zustand des zwischen den beiden abzudichtenden Bauteilen eingepressten Dichtringes und Stützring zumindest bereichsweise ein Spalt verbleibt, wobei der Stützring an der Nutstützflanke flächig anliegt. Die Anordnung eines Spaltes ist insbesondere bei der Anordnung des Dichtringes zwischen zwei Stützringen von Bedeutung. Vorzugsweise erstreckt sich der Spalt über ≥ 50 oder ≥ 75, besonders bevorzugt die gesamte radiale Erstreckung des Stützringes bzw. Erstreckung der an den Dichtring anzulegenden Dichtfläche des Stützringes. Hierdurch hat der Dichtring in der montierten Dichtungsanordnung - ohne Druckbelastung durch das abzudichtende Fluid - noch ein gewisses Spiel, um beispielsweise thermische Ausdehnungen des Dichtringes und/oder Druckschwankungen aufzufangen, wodurch ein zu hoher Materialstress vermieden wird.

Besonders bevorzugt beträgt das Volumen des Spaltes zwischen Dichtring und Stützring zwischen 1 und 8% des Dichtringvolumens, vorzugsweise zwischen ca. 2 und ca. 6%, besonders bevorzugt ca. 3%.

Vorzugsweise erstreckt sich der Stützring ausgehend von dem zwischen den beiden abzudichtenden Bauteilen vorgesehenen Spalt nur bis etwa an den Dichtring heran und ist geringfügig von diesem beabstandet. Hierdurch kann der Dichtring in verpresstem Zustand sich an den den Nutgrund zugewandten Stützringbereich anschmiegen. Die Einbauchung des Stützringes ist vorzugsweise derart ausgebildet, dass sich der zwischen Dichtring und Stützring erstreckende Spalt bei lose in die Nut eingelegtem Dichtring von der dem Nutgrund zugewandten Spaltseite zu der offenen Nutseite hin erweitert, vorzugsweise kontinuierlich erweitert. Der Dichtring kann hierdurch besonders vorteilhaft von dem Stützring abgestützt werden.

Bei der Anordnung nur eines Stützringes kann der Dichtring im lose in die Nut eingelegten und/oder im verpressten Zustand flächig und vorzugsweise über die gesamte Anlagefläche spaltfrei an dem Stützring anliegen. Ferner sind bei Anordnung nur eines Stützringes Stützring und Dichtring derart ausgeführt, dass auf der dem Stützring gegenüberliegenden Nutseite ein Spalt verbleibt, dessen Querschnitt bei unmontierter Dichtungsanordnung der Querschnittskontur des vorgesehenen Stützringes entsprechen könnte. Das Spaltvolumen bei montierter Dichtungsanordnung kann ca. 60% oder weniger, z.B. weniger als ca. 40-50% des Stützringvolumens des gegenüberliegenden Stützringes betragen. Hierdurch wird der Dichtring sicher in der Nut gehaltert.

Es versteht sich, dass eine Anordnung mit einem Stützring bei einseitiger Druckbeanspruchung durch ein fluides Medium zweckmäßig ist, wobei der Stützring niederdruckseitig angeordnet ist, ein Anordnung mit zwei Stützringen bei beidseitiger Druckbeanspruchung. Die beiden Stützringe können baugleich ausgeführt sein. Vorzugsweise wird hierbei der Dichtring bei montierter Dichtringanordnung praktisch vollständig von den beiden Stützringen und dem Nutgrund sowie dem zweiten Bauteil jeweils unter Ausbildung von Dichtflächen umschlossen, wobei jeweils der oben beschriebene, definierte Spalt zwischen Stützring und Dichtring verbleiben kann.

Vorzugsweise liegt jeweils bei lose in die Nut eingelegtem Dichtring und/oder in der Nut zwischen den beiden Bauteilen verpresstem Dichtring zwischen Stützring und stützringseitiger Nutflanke kein Spalt vor, in den abzudichtendes Fluid eindringen kann, insbesondere nicht in einem die Lage des Stützringes signifikant verändernden Ausmaß. Dies kann für Dichtungsanordnungen mit einem oder mit beidseitig des Dichtringes angeordnetem Stützring gelten, in letzterem Fall insbesondere für den hochdruckseitigen Stützring und/oder den niederdruckseitigen Stützring.

Besonders bevorzugt ist der Stützring ferner derart ausgebildet, dass dieser mit einer dem zweiten Bauteil zugewandten Fläche abdichtend an dem zweiten Bauteil anliegt. Der Stützring weist somit zwei schräg zueinander stehende Abdichtflächen auf, so dass der Stützring keilförmig zwischen erstem und zweitem Bauteil angeordnet ist, wobei der Stützring an beiden Bauteilen abdichtend anliegt. Hierbei wird die Lage des Stützringes gegenüber dem ersten und zweiten Bauteil jeweils durch die Einwirkung des Dichtringes bestimmt. Insgesamt liegt hierdurch eine Dichtungsanordnung mit besonders hoher Dichtigkeit vor.

Die erfindungsgemäße Dichtungsanordnung kann bei zwei zueinander ruhenden Bauteilen eingesetzt werden, vorzugsweise sind das erste und das zweite Bauteil gegeneinander beweglich, insbesondere axial und/oder radial lageveränderlich. Die Dichtungsanordnung kann somit insbesondere als Kolben- oder Wellendichtung eingesetzt werden. Der Dichtring kann jeweils in Kolben oder Welle oder in dem jeweiligen Gehäuse angeordnet sein.

Bei Ausbildung der erfindungsgemäßen Dichtungsanordnung als Wellendichtung ist diese vorzugsweise derart ausgeführt, dass bei bestimmungsgemäßem Fluiddruck des durch die Dichtung abgedichteten Fluids Dichtring und Stützring bei rotierender Welle ortsfest zueinander und vorzugsweise auch ortsfest zu dem die Dichtringaufnahmenut aufweisenden ersten Bauteil angeordnet sind. Dies ergibt sich insbesondere bei mittleren bis höheren Fluiddrücken der jeweiligen die Dichtungsanordnung aufweisenden Einrichtung, gegebenenfalls aber auch bereits bei niedrigem Fluiddruck. Hierzu ist insbesondere der Anstellwinkel der nutseitigen Stützringfläche entsprechend zu wählen.

Die erfindungsgemäße Dichtungsanordnung ist insbesondere im Hydraulikbereich, z.B. bei Hydraulikgetrieben, oder bei anderen Anwendungen im Kraftfahrzeugbereich einsetzbar.

Der Stützring kann aus verschiedenen Materialien gefertigt sein, vorzugsweise besteht er aus einem thermoplastischen Kunststoffmaterial oder einem durch Presssintern verarbeitbaren Kunststoff wie PTFE bestehen, ggf. auch aus einem Metall, ohne hierauf beschränkt zu sein. Der Stützring kann mittels eines Spritzgießverfahrens hergestellt sein. Der Dichtring besteht jeweils aus einem elastomeren Material, z.B. einem Gummi oder synthetischem Kautschuk, der vorzugsweise vernetzt ist. Vorzugsweise ist der Dichtring selber jeweils nicht kompressibel.

Die Erfindung wird nachfolgend beispielhaft beschrieben und anhand der Figuren beispielhaft erläutert. Es zeigen:

Figur 1    eine schematische Querschnittsdarstellung einer ersten Ausführungsform mit lose eingelegtem Dichtring,

Figur 2    eine Dichtringanordnung mit Stützring nach Figur 1 in montiertem Zustand,

Figur 3    eine schematische Querschnittsdarstellung einer erfindungsgemäßen Dichtungsanordnung mit zwei Stützringen,

Figur 4    eine schematische Darstellung der Anordnung nach Figur 3 in montiertem Zustand,

Figur 5    eine weitere schematische Darstellung der Dichtungsanordnung gemäß Figur 3.

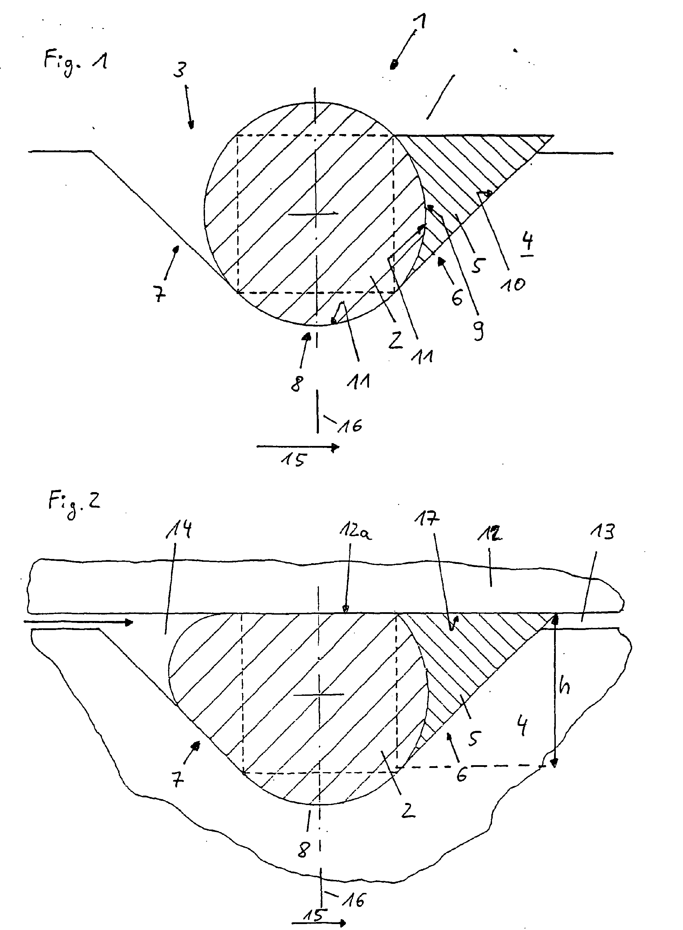

Figur 1 zeigt eine erfindungsgemäße Dichtungsanordnung 1 mit einem elastischen Dichtring 2 in Form eines O-Ringes, welcher lose in eine Nut 3 eines ersten Bauteils 4 eingelegt ist, wobei die Nut umlaufend am Außenumfang des Bauteils, z.B. einer Welle oder eines Kolbens, eingebracht ist. Der Dichtring 2 kann mit einer gewissen radialen Vorspannung in der Nut angeordnet sein, wobei jedoch dessen Querschnittsgestalt im Wesentlichen oder vollständig erhalten bleibt. Die Nut 3 weist eine erste, einem Stützring 5 zugewandte Nutflanke 6 und eine gegenüberliegende zweite Nutflanke 7 sowie einen Nutgrund 8 auf, der hier bogenförmig ausgeführt ist. Die Nutflanken 6, 7 sind als kegelstumpfförmige Mantelflächen mit konstanter Neigung ausgeführt und schließen einen Winkel von 90° ein. Die Nut weist einen im Wesentlichen dreieckigen Querschnitt auf, wobei der Nutgrund einer Querschnittsecke zugeordnet ist und die Nut sich zu der offenen Nutseite hin erweitert. Der Dichtring wird gegen einen Fluiddruck (Pfeil) durch den Stützring 5 abgestützt, welcher sich flächig, genauer vollflächig, an der Nutflanke 6 mit seiner nutseitigen Dichtfläche 10 abstützt und eine Abdichtung gegenüber dem fluiden Medium bereitstellt. Ferner weist der Stützring 5 eine dichtend an den Dichtring anlegbare Dichtfläche 9 auf, die als Einbuchtung mit einem bogenförmigen, genauer gesagt einem kreisbogenförmigen, Querschnitt ausgebildet ist. Der Dichtring 2 weist somit zumindest zwei bogenförmige Querschnittsbereiche 11 auf, welche als Dichtflächen gegenüber dem Nutgrund und dem Stützring dienen. Die Radien der Dichtflächen 11 des Dichtringes entsprechen den Krümmungsradien von Dichtfläche 9 und Nutgrund 8. Der Dichtring weist hierbei insgesamt einen kreisförmigen Querschnitt auf, wobei auch Abwandlungen der Querschnittsgeometrie des Dichtringes möglich sind, sofern sie die erfindungsgemäße Funktionsweise nicht beeinträchtigen oder aufheben.

Figur 2 zeigt die Dichtungsanordnung im montierten Zustand, wobei der Dichtring 2 zwischen dem ersten und zweiten Bauteil 4, 12 unter Veränderung seiner Querschnittsgestalt verpresst ist und mit dem Bereich 12a abdichtend an dem zweiten Bauteil 12 anliegt und hierdurch den Spalt 13 zwischen dem ersten und zweiten Bauteil gegen das Fluid (Pfeil) abdichtet. Das Volumen der Nut 3 (zuzüglich des Spaltvolumens) ist hierbei derart bemessen, dass zusätzlich zu der Aufnahme von Stützring und Dichtring ein freies Volumen 14 verbleibt, welches im dritten Eckbereich der dreieckförmigen Nut angeordnet ist und druckseitig an den Spalt 13 angrenzt. Der Dichtring liegt hierbei abdichtend an dem Nutgrund 8, der Nutflanke 7 und der Dichtfläche 8 des Stützringes an. Der Dichtring wird hierbei um einen Umfangswinkel von jeweils ca. 90° von dem Stützring 5 und von dem Nutgrund 8 unter Ausbildung von Dichtflächen, genauer gesagt einer in Umfangsrichtung des Dichtringes kontinuierlichen Dichtfläche, umgeben, wobei die Kontur der Dichtfläche 10 und des des Nutgrundes 8 jeweils der Krümmung des gegenüberliegenden Dichtringbereichs in lose eingelegtem Zustand entsprechen, d.H. als Kreisbogenabschnitte ausgeführt sind. Hierdurch ergibt sich eine sehr enge Umschließung des Dichtringes um ca. 180°, die dessen Querschnittsgeometrie angepasst ist, so dass der Dichtring im Bereich der bogenförmigen Querschnitte 11 praktisch nicht deformiert wird. Auch bei Druckschwankungen ergeben sich somit im Bereich der Dichtflächen praktisch keine Materialermüdungen. Die Verpressung des Dichtringes zwischen den beiden Bauteilen 4, 12 führt vielmehr zu einer Deformation des Dichtringes auf der dem Stützring gegenüberliegenden Seite. Ferner sind die Krümmungen der Stützringdichtfläche 8 und des an den Stützring angrenzenden Nutbereichs, hier im Wesentlichen des Nutgrundes 8, derart aneinander angepasst, dass die beiden angrenzenden Dichtflächen von Stützring 5 und Nut 3, hier die Dichtfläche im Bereich des Nutgrundes 8, derart ineinander übergehen, dass diese auf einem gemeinsamen Kreisbogen, hier dem Kreisbogenumfang des Dichtringes, liegen. Eine sprunghafte Änderung des Anstellwinkels der Dichtfläche von Stützring und/oder Nut zu der Dichtringachse 15 wird hierdurch vermieden.

Die Höhe h des Stützringes 5 ist geringer als der Abstand des Nutgrundes von dem gegenüberliegenden Bauteil 12, an welchem der Dichtring abdichtend anliegt, und auch geringer als die Tiefe der Nut 3. Aufgrund der Schrägstellung der stützringseitigen Nutflanke 6 zur Dichtringachse 15 wird ermöglicht, dass der Stützring durch den Dichtring in seiner Sollstellung an dem Spalt 13 positioniert wird. Die Nutflanke 6 steht hierbei in einem Winkel von 45° zur Dichtringsachse, so dass auch der von den Stützringflächen 9 und 16 eingeschlossene Winkel 45° beträgt. Die Nutflanke 6 geht hierbei tangential in den kreisbogenförmigen Nutgrund 8 über.

Nach dem Ausführungsbeispiel bildet die dem Nutgrund abgewandte Stützringseite 17 ebenfalls eine Abdichtfläche gegenüber dem Bauteil 11, wobei zur Verringerung von Extrusionen lediglich der Stützring mit der Seite 15 in den Spalt 13 hineinragen muss, um diesen zu verengen. Durch die Schrägstellung der Nutflanke 6 und damit auch der vollflächig an dieser anliegenden Stützringfläche 17 zur Dichtringachse um ca. 45° wird somit erzielt, dass der Stützring durch die Verpressung des Dichtringes seine Solllage findet und sich Stützring und Dichtring gegenseitig in der Nut zentrieren. Der Stützring kann hierbei um einen gewissen Betrag unter während Abdichtung gegenüber der Nutflanke 6 hin entlang dieser zum Nutgrund bzw. zu dem gegenüberliegenden Bauteil 12 hin verschoben werden. Dies wird durch eine gewisse Elastizität des Stützringes, insbesondere aufgrund einer Durchtrennung des Stützringes, erleichtert, wobei der Stützring in Druckrichtung einander überlappende Bereiche aufweisen kann, die in Art eines Schlosses wirken. Die Trennlinie kann hierzu z.B. Z-förmig verlaufen.

Der Dichtring wird bei seinem Einbau gemäß Figur 2 unter einer Verminderung der radialen Erstreckung vom Nutgrund weg um ca. 15% bezogen auf seinen ursprünglichen Durchmesser gestaucht, wobei bei der Stauchung das in den Dichtringquerschnitt eingeschriebene Quadrat, welches vorzugsweise mit allen Ecken an dem Kreisbogen anliegt, durch die Stauchung nicht tangiert wird.

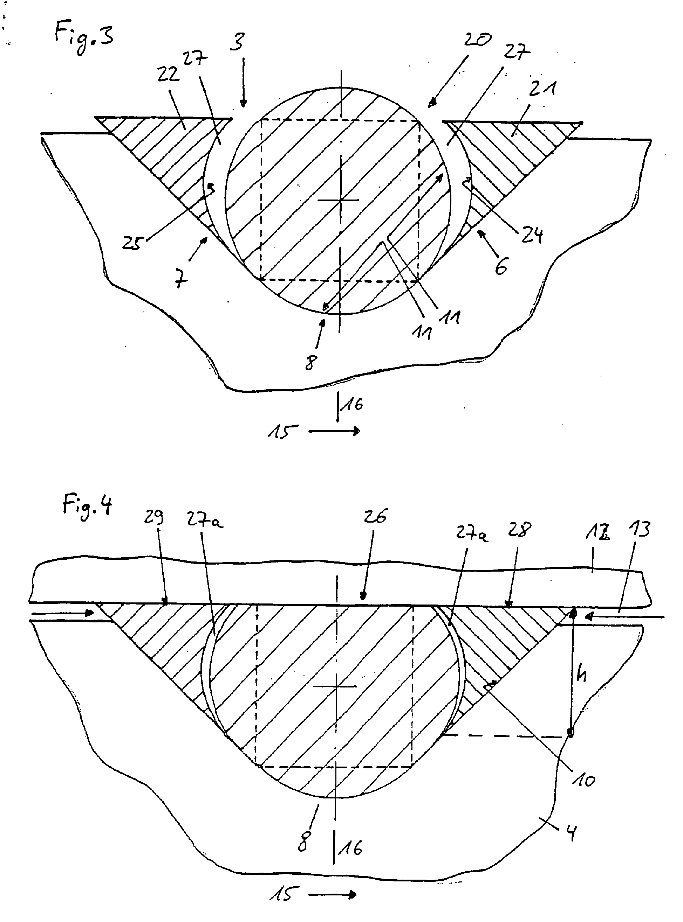

Die Figuren 3 und 4 zeigen eine weitere erfindungsgemäße Dichtungsanordnung 20 mit beidseitig des Dichtringes 2 angeordneten Stützringen 21, 22, was bei beidseitig wirkendem Fluiddruck vorteilhaft ist. Die einen im Wesentlichen dreieckigen Querschnitt aufweisende Nut 3 sowie die Anordnung des Dichtringes 2 in der Nut in lose eingelegtem Zustand entsprechen der des Ausführungsbeispiels der Figuren 1 und 2, auf welche hiermit voll inhaltlich Bezug genommen wird. Gleiche Merkmale sind mit gleichen Bezugsziffern versehen.

Wie in den Figuren 1 und 2 wird auch nach diesem Ausführungsbeispiel durch die im Wesentlichen dreieckige Querschnittsgestalt von Nut und Stützring und der flächigen Anlage des jeweiligen Stützringes auf der schräg in einem Winkel von 45° zur Dichtringachse 15 verlaufenden Nutflanke 6, 7 erreicht, dass sowohl der druckseitige Stützring 22 als auch der niederdruckseitige Stützring 21 jeweils in seiner Solllage bezüglich des zwischen den Bauteilen 4, 11 angeordneten Spaltes 13 zentriert wird, wobei andererseits die Lage des Dichtringes durch die beiden Stützringe definiert wird. Die Dichtungsanordnung ist hierbei symmetrisch in Bezug auf die Dichtringhauptebene 16 ausgeführt.

Im Unterschied zu dem vorhergehenden Ausführungsbeispiel weisen die Stützringe 21, 22 eine geringere Höhe h auf, so dass bei nur lose in die Nut eingelegtem Dichtring 2 die Stützringe 21, 22 seitlich geringfügig von dem Dichtring beabstandet sind, während im Einbauzustand gemäß Figur 4 bei zwischen den Bauteilen 4, 11 verpresstem Dichtring dieser die Stützringe 21, 22 berührt oder nahezu berührt, so dass zumindest bei bestimmungsgemäßem Fluiddruck bei Betrieb der jeweiligen Einrichtung der Dichtring 2 an die jeweilige Dichtfläche 24, 25 des Stützringes gedrückt wird. Die Höhe h des Stützringes in radialer Richtung entspricht hierbei in etwa 70% des Abstandes der Dichtfläche 26 des zweiten Bauteils 13 von dem Nutgrund 8 und in etwa 75% der Nuttiefe. Ferner ist die Höhe h des Stützringes kleiner als die Kantenlänge des in den Dichtringquerschnitt eingeschriebenen, mit allen Ecken am Querschnittsumfang anliegenden Quadrates, wohingegen die Höhe h des Stützringes gemäß den Figuren 1 und 2 im Wesentlichen der Kantenlänge des Quadrates entspricht. Wie auch nach dem ersten Ausführungsbeispiel wird der Dichtring derart zwischen den beiden Bauteilen 4, 13 verpresst, dass das eingeschriebene Quadrat erhalten bleibt und die Dichtfläche 26 des Bauteils 13 mit einer Kante des Quadrates zusammenfällt. Vorzugsweise betragen die Abweichungen in der Höhe ≤ 10%, vorzugsweise ≤ 3 bis 5%.

Aufgrund der symmetrischen Anordnung und Ausbildung der Stützringe 21, 22 ist auch im verpressten Zustand (Figur 4) der Dichtring symmetrisch zu der Dichtringhauptebene 16 angeordnet.

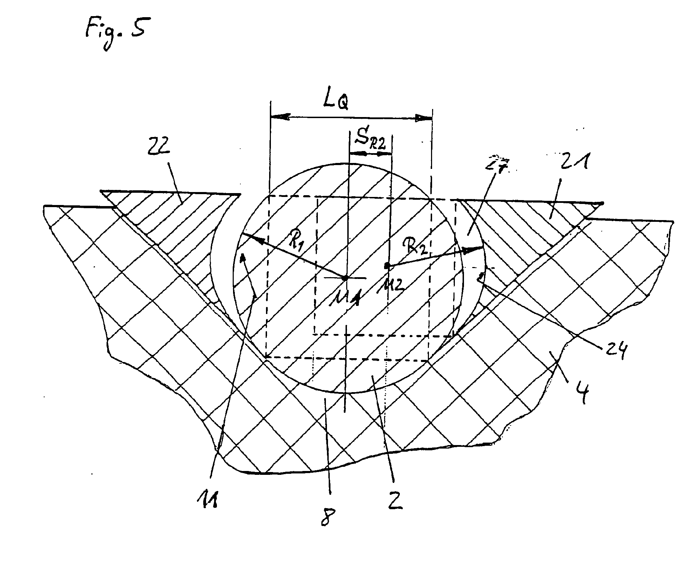

Die Stützringe 21, 22 weisen auch hier bogenförmig, genauer gesagt kreisbogenförmig, eingebuchtete Dichtflächen 24, 25 auf, deren Krümmungsradius $R2$ hier kleiner ist als der Krümmungsradius $R1$ des als O-Ring ausgebildeten Dichtringes (siehe Figur 5). Der Mittelpunkt des Radius $R2$ ist hierbei in Richtung auf den jeweiligen Stützring hin von dem Kreismittelpunkt M1 versetzt, und zwar optimalerweise um den Betrag $S(R2)$, wobei gegebenenfalls Abweichungen möglich sind, die jedoch vorzugsweise $\leq 10\%$, besonders bevorzugt $\leq 3$ bis $5\%$ betragen. Ferner ist der Kreismittelpunkt M2 vom Nutgrund weg gegenüber dem Kreismittelpunkt M1 versetzt, so dass im Idealfall die Seitenkanten der in die Kreisbögen mit Radius $R1$ und $R2$ eingeschriebenen Quadrate zur Deckung kommen. Hierdurch wird eine optimale Dichtungsanordnung mit definierter Lage von Dichtring und Stützringen 21, 22 bereitgestellt, die eine besonders hohe Lebensdauer bei sehr hoher Dichtigkeit der Dichtungsanordnung und praktisch vollständig verhinderter Extrusion des Dichtringes durch den Spalt 13 bedingt. Es versteht sich, dass gegebenenfalls auch ein nach diesem Ausführungsbeispiel ausgeführter Stützring 21 nur einseitig eines Dichtringes in Abwandlung des ersten Ausführungsbeispiels vorgesehen sein kann.

Ferner ist der eine oder beide Stützringe 21, 22 derart gestaltet, dass auch bei zwischen den Bauteilen 4, 12 verpresstem Dichtring jeweils zwischen Dichtring und Stützring ein Spalt 27 mit definierter Spaltweite verbleibt. Der Spalt 27 weitet sich hierbei bei nur lose in der Nut eingelegtem Dichtring (siehe Figur 3) vom Nutgrund her zur offenen Nutseite hin auf, wobei der Spalt 27a bei verpresstem Dichtring (Figur 4) eine im Wesentlichen gleiche Spaltweite aufweisen oder sich gegebenenfalls auch zum Nutgrund und/oder zur freien Nutseite hin verjüngen, gegebenenfalls auch aufweiten kann, was jedoch weniger bevorzugt ist. Das Spaltvolumen jedes der beiden Spalte beträgt hierbei bei verpresstem Dichtring ca. 3% des Dichtringvolumens. Hierdurch wird auch bei stark schwellenden Drücken und insbesondere bei thermischer Ausdehnung des Dichtringes eine unerwünschte Quetschung des Dichtringes vermieden und so dessen Lebensdauer bei optimaler Dichtigkeit zusätzlich erhöht.

Bei der Dichtungsanordnung gemäß den Figuren 3 und 4 liegt der Dichtring sowohl am Nutgrund 8 als auch an beiden Nutflanken 6, 7 abdichtend an, wobei die beiden Nutflanken in Art von Kegelstumpfmantelflächen mit linearem Querschnitt ausgebildet sind. Die bogenförmig eingebuchtete Dichtfläche 8 der Stützringe 21, 22 (oder auch nur eines derselben) geht hierbei im Wesentlichen stetig in die angrenzende Nutflanke 6, 7 über, welche im Wesentlichen tangential zu dem die Dichtfläche ausbildenden Bogenabschnitt angeordnet ist.

Ferner stellt auch nach diesem Ausführungsbeispiel jeder der Stützringe 21, 22 eine Dichtfläche 28, 29 bereit, die flächig, insbesondere vollflächig, an dem zweiten Bauteil 12 anliegt.

Gemäß beiden Ausführungsformen der Figuren 1, 2 und 3, 4 ist aufgrund der Schrägstellung der nutseitigen Anlagefläche des Stützringes und der Einbuchtung eine Geometrie geschaffen, so dass bei Anwendung der Dichtungsanordnung als Wellendichtung bereits bei niedrigen Fluiddrücken eine ortsfeste Anordnung von Dichtring zu Stützring und ferner auch von Dichtring und Stützring zu dem ersten Bauteil bereitgestellt wird. Der Spalt 13 wird hierbei vollständig von dem Stützring überbrückt.

Auch nach dem Ausführungsbeispiel der Figuren 3 und 4 ist der Dichtring als geschlossener Ring ausgeführt, der Stützring jedoch vorzugsweise getrennt, um eine radiale Aufweitung desselben zu erleichtern.

Durch die erfindungsgemäße Dichtungsanordnung wird somit eine Extrusion des Dichtringes durch den Spalt zwischen den beiden Bauteilen vollständig verhindert und zudem die Lebensdauer des Dichtungsringes beträchtlich erhöht, wobei zugleich Dichtungsringe einsetzbar sind, an deren Qualität der Oberflächenbeschaffenheit, insbesondere der Qualität der Entgratung, keine besondere Anforderungen zu stellen sind.

## Bezugszeichenliste

| | |
|---|---|
| 1 | Dichtungsanordnung |
| 2 | Dichtring |
| 3 | Nut |
| 4 | Bauteil |
| 5 | Stützring |
| 6 | Nutflanke |
| 7 | Nutflanke |
| 8 | Nutgrund |
| 9,10 | Dichtfläche |
| 11 | bogenförmiger Querschnittsbereich |
| 12 | zweites Bauteil |
| 12a | Dichtbereich |
| 13 | Spalt |
| 14 | freies Volumen |
| 15 | Dichtringachse |
| 16 | Dichtringhauptebene |
| 17 | Stützringseite |
| 20 | Dichtungsanordnung |
| 21, 22 | Stützring |
| 24, 25 | Dichtfläche |
| 26 | Dichtfläche |
| 27 | Spalt |
| 27a | Spalt |
| 28, 29 | Dichtfläche |
| M1 | Kreismittelpunkt 1 |
| M2 | Kreismittelpunkt 2 |
| R1 | Radius 1 |
| R2 | Radius 2 |
| S(R2) | Abstand R1-R2 |
| h | Stützringhöhe |

**Patentansprüche**

1. Dichtungsanordnung mit einem elastischen Dichtring (2), der abdichtend zwischen einem ersten und einem zweiten Bauteil, die einander umgeben, angeordnet ist, wobei der Dichtring (2) in einer um den Innen- oder Außenumfang des ersten Bauteils umlaufenden Nut (3) angeordnet ist, die eine erste und eine zweite jeweils einander gegenüberliegende Nutflanke (6) und einen Nutgrund (8) aufweist und wobei der Dichtring (2) abdichtend an zumindest einer Nutflanke (6) und/oder dem Nutgrund (8) anliegt, und wobei der Dichtring (2) im Einbauzustand unter Querschnittsdeformation in der Nut (3) verpresst ist, wobei ferner mindestens ein Stützring (5, 21, 22) vorgesehen ist, der mit einer Dichtfläche abdichtend an dem Dichtring (2) und mit einer gegenüberliegenden Stützfläche an einer stützringseitigen Nutflanke (6) anliegt, und wobei der Dichtring (2) wenigstens zwei Dichtflächen mit bogenförmigen Querschnittsbereichen aufweist, die dem Nutgrund (8) und dem Stützring (5, 21, 22) zugewandt sind, wobei die Nut (3) einen im Wesentlichen dreieckigen Querschnitt mit einer den Nutgrund (8) bildenden Querschnittsecke aufweist und zumindest die stützringseitige Nutflanke (6) schräg zur Dichtringachse (15) gestellt ist, wobei der Stützring (5, 21, 22) einen im Wesentlichen dreieckigen Querschnitt und in Montageanordnung eine geringere Höhe als der Abstand des Nutgrundes (8) von dem zweiten Bauteil aufweist und wobei der Stützring (5, 21, 22) durch den verpressten Dichtring (2) in seiner Lage an dem abzudichtenden Spalt zwischen dem ersten und dem zweiten Bauteil positioniert wird, **dadurch gekennzeichnet, dass** der Nutgrund (8) im Querschnitt bogenförmig mit einem Radius ausgeführt ist, der in etwa gleich oder größer dem Krümmungsradius des gegenüberliegenden Dichtringbereichs bei lose in die Nut (3) eingelegtem Dichtring (2) ist.

2. Dichtungsanordnung nach Anspruch 1, **dadurch gekennzeichnet, dass** die Stützring (5, 21, 22)seitige Nutflanke (6) einen Winkel von ≤ 65° zur Dichtringachse aufweist.

3. Dichtungsanordnung nach einem der Ansprüche 1 oder 2, **dadurch gekennzeichnet, dass** der von den beiden Nutflanken (6) eingeschlossene Winkel ca. 60° bis ca. 120° beträgt.

4. Dichtungsanordnung nach einem der Ansprüche 1 bis 3, **dadurch gekennzeichnet, dass** der Dichtring (2) im lose in die Nut (3) eingelegten und/oder im verpressten und druckbelasteten Zustand durchgehend am Nutgrund (8) und bereichsweise an beiden sich an den Nutgrund (8) anschließenden Nutflanken (6,7) anliegt.

5. Dichtungsanordnung nach einem der Ansprüche 1 bis 4, **dadurch gekennzeichnet, dass** die dichtringseitige Dichtfläche des Stützringes (5, 21, 22) eingebaucht ist.

6. Dichtungsanordnung nach Anspruch 5, **dadurch gekennzeichnet, dass** die Stützringeinbauchung zumindest im Wesentlichen stetig in den angrenzenden Dichtbereich der Nut (3) übergeht.

7. Dichtungsanordnung nach Anspruch 5 oder 6, **dadurch gekennzeichnet, dass** die Stützringeinbauchung eine Krümmung oder einen Krümmungsradius aufweist, der in etwa gleich oder kleiner als die Krümmung oder der Krümmungsradius des gegenüberliegenden Dichtringbereichs des demontierten Dichtringes (2) ist.

8. Dichtungsanordnung nach Anspruch 6 oder 7, **dadurch gekennzeichnet, dass** der Krümmungsradius der Einbauchung des Stützringes (5, 21, 22) ca. 10 bis 20% kleiner als der Krümmungsradius des Dichtringes (2) ist.

9. Dichtungsanordnung nach einem der Ansprüche 6 bis 8, **dadurch gekennzeichnet, dass** der Abstand des Krümmungsmittelpunktes der Stützringeinbauchung von dem Krümmungsmittelpunkt der Dichtringwölbung oder einer Einhüllenden des Dichtringquerschnittes dem ca. 0,3 bis ca. 0,4-fachen Radius der Dichtringkrümmung bzw. der Einhüllenden des Dichtringquerschnittes ist.

10. Dichtungsanordnung nach einem der Ansprüche 1 bis 9, **dadurch gekennzeichnet, dass** die radiale Höhe h des Stützringes (5, 21, 22) ca. 40 bis ca. 80% der Abstandes des Nutgrundes (8) von der gegenüberliegenden Dichtfläche des zweiten Bauteils beträgt.

11. Dichtungsanordnung nach einem der Ansprüche 1 bis 10, **dadurch gekennzeichnet, dass** im eingebauten Zustand des Dichtringes (2) und bei gegen die Nutflanke (6,7) anliegendem Stützring (21, 22) zwischen Dichtring (2) und Stützring (21, 22) zumindest bereichsweise ein Spalt (27) verbleibt.

12. Dichtungsanordnung nach Anspruch 11, **dadurch gekennzeichnet, dass** das Spaltvolumen des Spaltes zwischen Dichtring (2) und Stützring (21, 22) zwischen ca. 1% und ca. 8% des Dichtringvolumens beträgt.

13. Dichtungsanordnung nach einem der Ansprüche 1 bis 12, **dadurch gekennzeichnet, dass** der in der Nut (3) des ersten Bauteils angeordnete Stützring (5, 21, 22) mit seiner dem Nutgrund (8) gegenüberliegenden Fläche (16) abdichtend an dem zweiten Bauteil anliegt.

14. Dichtungsanordnung nach einem der Ansprüche 1 bis 13, **dadurch gekennzeichnet, dass** der Dichtring (2) in eingebautem Zustand um ca. 10 bis 20% bezogen auf seinen Durchmesser bei demontiertem Dichtring (2) gestaucht ist.

15. Dichtungsanordnung nach einem der Ansprüche 1 bis 14, **dadurch gekennzeichnet, dass** der Querschnitt des Dichtringes (2) kreisförmig ist.

16. Dichtungsanordnung nach einem der Ansprüche 1 bis 15, **dadurch gekennzeichnet, dass** der Dichtring (2) beidseitig von je einem Stützring (5, 21, 22) umgeben ist.

17. Dichtungsanordnung nach einem der Ansprüche 1 bis 16, **dadurch gekennzeichnet, dass** der Dichtring (2) als Kolbenring oder als Wellendichtring fungiert.

18. Dichtungsanordnung nach Anspruch 17, **dadurch gekennzeichnet, dass** die Dichtungsanordnung als Wellendichtung derart ausgebildet ist, dass bei bestimmungsgemäßem Fluiddruck des durch die Dichtung abgedichteten Fluids Dichtring (2) und Stützring (5, 21, 22) bei rotierender Welle ortsfest zueinander angeordnet sind.

**Claims**

1. Sealing arrangement comprising an elastic sealing ring (2) which is arranged in a sealing manner between a first and second component surrounding each other, wherein the sealing ring (2) is disposed in a circumferential groove (3) which is formed on the inner and outer circumference of the first component and which comprises a first and a second groove flank (6) facing each other and a groove bottom (8) and wherein the sealing ring (2) is applied in a sealing manner at least against one groove flank (6) and/or the groove bottom (8) and wherein the sealing ring (2) in its installed condition is press-fitted in the groove (3) under deformation of the cross section, wherein at least one support ring (5, 21, 22) is provided which is applied by one sealing surface and in a sealing manner against the sealing ring (2) and by an opposite supporting surface against a support ring-side groove flank (6) and wherein the sealing ring (2) has at least two sealing surfaces with arc-shaped cross section areas facing the groove bottom (8) and the support ring (5, 21, 22), wherein the groove (3) has a substantially triangular cross section with a corner of the cross section forming the groove bottom (8) and wherein at least one support ring-side groove flank (6) is inclined with respect to the sealing ring axis (15), wherein the support ring (5, 21, 22) has a substantially triangular cross section and in its arrangement for mounting a height which is lower than the distance of the groove bottom (8) from the second component and wherein the support ring (2) is positioned on the gap to be sealed between the first and the second components by the press-fitted sealing ring (2), **characterized in that** the groove bottom (8) has an arc-shaped cross section with a radius approximately equal to or greater than the curvature radius of the opposing sealing ring part with the sealing ring (2) loosely inserted in the groove (3).

2. Sealing arrangement according to claim 1, **characterized in that** the groove flank (6) on the side of the support ring (5, 21, 22) has an angle of ≤ 65° to the sealing ring axis.

3. Sealing arrangement according to one of the claims 1 or 2, **characterized in that** the angle included by the two groove flanks (6) is approximately 60° to approximately 120°.

4. Sealing arrangement according to one of the claims 1 to 3, **characterized in that** the sealing ring (2) in its condition loosely inserted in the groove (3) and/or in the press-fitted or pressure-loaded condition is continuously applied against the groove bottom (8) and in some areas against both groove flanks (6, 7) joining the groove bottom (8).

5. Sealing arrangement according to one of the claims 1 to 4, **characterized in that** the sealing ring-side sealing surface of the support ring (5, 21, 22) is inwardly bulged.

6. Sealing arrangement according to claim 5, **characterized in that** the inward bulging of the support ring substantially continuously passes over to the adjacent sealing area of the groove (3).

7. Sealing arrangement according to claim 5 or 6, **characterized in that** the inward bulging of the support ring has a curvature or a curvature radius equal to or smaller than the curvature or the curvature radius of the opposing sealing ring area of the demounted sealing ring (2).

8. Sealing arrangement according to claim 6 or 7, **characterized in that** the curvature radius of the support ring (5, 21, 22) is smaller than the curvature radius of the sealing ring (2) by approximately 10 to 20%.

9. Sealing arrangement according to one of the claims 6 to 8, **characterized in that** the distance of the center of curvature of the inward bulging of the support ring from the center of curvature of the bulging of the sealing ring or an envelope of the sealing ring cross section is approximately 0.3 to 0.4 times the radius of the curvature of the sealing ring or the envelope of the sealing ring cross section.

10. Sealing arrangement according to one of the claims 1 to 9, **characterized in that** the radial height h of the support ring (5, 21, 22) is approximately 40 to 80% of the distance of the groove bottom (8) from the opposing sealing surface of the second component.

11. Sealing arrangement according to one of the claims 1 to 10, **characterized in that** in the installed condition of the sealing ring (2) and with the support ring (21, 22) applied against the groove flank (6, 7), a gap is (27) is left between the sealing ring (2) and the support ring (21, 22) at least in some parts.

12. Sealing arrangement according to claim 11, **characterized in that** the gap volume of the gap between the sealing ring (2) and the support ring (21, 22) is between approximately 1% and 8% of the volume of the sealing ring.

13. Sealing arrangement according to one of the claims 1 to 12, **characterized in that** the support ring (5, 21, 22) arranged in the groove (3) of the first component is applied with its surface (16) opposing the groove bottom (8) against the second component in a sealing fashion.

14. Sealing arrangement according to one of the claims 1 to 13, **characterized in that** the sealing ring (2) in its installed condition is compressed by about 10 to 20% compared to its diameter in the demounted state of the sealing ring (2).

15. Sealing arrangement according to one of the claims 1 to 14, **characterized in that** the cross section of the sealing ring (2) is circular.

16. Sealing arrangement according to one of the claims 1 to 15, **characterized in that** the sealing ring (2) is surrounded on both sides by a respective support ring (5, 21, 22).

17. Sealing arrangement according to one of the claims 1 to 16, **characterized in that** the sealing ring (2) works as a piston ring or a shaft sealing.

18. Sealing arrangement according to claim 17, **characterized in that** the sealing arrangement as a shaft sealing is designed in such a manner that at an intended fluid pressure of the fluid sealed by the sealing, the sealing ring (2) and the support ring (5, 21, 22) are stationary with respect to each other if the shaft rotates.

**Revendications**

1. Dispositif d'étanchéité avec une bague élastique (2) qui est arrangée de façon étanche entre un premier et un second élément de construction s'entourant, dans lequel dispositif la bague d'étanchéité est arrangée dans une rainure circonférentielle (3) sur la circonférence intérieure ou extérieure du premier élément de construction, ladite rainure a un premier et un second flanc (6) respectivement opposés et un fond (8), et la bague d'étanchéité est appliquée contre l'un au moins de flancs (6) et/ou le fond (8) de façon étanche, et la bague (2), dans l'état installée, est assemblée dans la rainure (3) par pressage et sous une déformation de la section transversale, et au moins une bague d'appui (5, 21, 22) est prévue en outre qui est appliquée contre la bague d'étanchéité par une surface d'étanchéité et contre un flanc de rainure (6) du côté de la bague d'appui par une surface de support opposée, et la bague d'étanchéité a au moins deux surfaces d'étanchéité avec des parties de section transversale arquées qui sont tournées vers le fond de rainure (8) et vers la bague d'appui (5, 21, 22), et la rainure (3) a une section transversale essentiellement triangulaire avec un coin de la section transversale formant le fond de rainure (8), et au moins le flanc de rainure (6) du côté de la bague d'appui est incliné par rapport à l'axe (15) de la bague, et la bague d'appui (5, 21, 22) a une section transversale essentiellement triangulaire, et dans la position de montage, une hauteur inférieure à la distance du fond de rainure (8) de second élément de construction, et la bague d'appui (5, 21, 22) est positionnée dans sa position sur la fente à étancher entre le premier et le second élément de construction au moyen de la bague d'étanchéité assemblée par pression, **caractérisé en ce que** le fond de rainure (8) a une section transversale arquée avec un rayon qui est sensiblement égale à ou plus grand que le rayon de courbure de la partie de la bague d'étanchéité opposée si la bague d'étanchéité (2) est placée de façon pas fixée dans la rainure (3).

2. Dispositif d'étanchéité selon la revendication 1, **caractérisé en ce que** le flanc de rainure (6) du côté de la bague d'appui (5, 21, 22) a un angle de ≤ 65° par rapport à l'axe de la bague d'étanchéité.

3. Dispositif d'étanchéité selon l'une des revendications 1 ou 2, **caractérisé en ce que** l'angle compris entre les deux flancs de rainure (6) est d'environ 60° à d'environ 120°.

4. Dispositif d'étanchéité selon l'une des revendications 1 à 3, **caractérisé en ce que** la bague d'étanchéité, dans une condition dans laquelle la bague d'étanchéité est placée dans la rainure (3) de façon pas fixée et/ou assemblée par pression et soumise à pression, est appliquée par endroits contre les deux flancs de rainure (6, 7) joignant le fond de rainure (8).

5. Dispositif d'étanchéité selon l'une des revendications 1 à 4, **caractérisé en ce que** la surface d'étanchéité de la bague d'appui (5, 21, 22) du côté de la bague d'étanchéité a une ébauche creuse.

6. Dispositif d'étanchéité selon la revendication 5, **caractérisé en ce que** l'ébauche creuse de la bague d'appui passe à la zone d'étanchéité adjacente de la rainure (3) de façon au moins essentiellement continue.

7. Dispositif d'étanchéité selon la revendication 5 ou 6, **caractérisé en ce que** l'ébauche creuse a une courbure ou un rayon de courbure qui est sensiblement égale ou inférieure à la courbure ou au rayon de courbure de la zone opposée de la bague d'étanchéité (2) démontée.

8. Dispositif d'étanchéité selon la revendication 6 ou 7, **caractérisé en ce que** le rayon de courbure de l'ébauche creuse de la bague d'appui (5, 21, 22) est inférieure au rayon der courbure de la bague d'étanchéité (2) par 10 à 20% environ.

9. Dispositif d'étanchéité selon l'une des revendications 6 à 8, **caractérisé en ce que** la distance du centre de courbure de l'ébauche creuse de la bague d'appui du centre de courbure de la convexité de la bague d'étanchéité ou de l'enveloppe de la section transversale de la bague d'étanchéité est d'environ 0.3 à 0.4 fois le rayon de courbure de la bague d'étanchéité ou de l'enveloppe de la section transversale de la bague d'étanchéité.

10. Dispositif d'étanchéité selon l'une des revendications 1 à 9, **caractérisé en ce que** l'hauteur radiale h de la bague d'appui (5, 21, 22) est d'environ 40 à d'environ 80% de la distance du fond de rainure (8) de la surface d'étanchéité opposée du second élément de construction.

11. Dispositif d'étanchéité selon l'une des revendications 1 à 10 **caractérisé en ce que**, dans la condition installée de la bague d'étanchéité (2) et lors de l'application de la bague d'appui (21, 22) contre le flanc de rainure (6, 7), il reste une fente entre la bague d'étanchéité (2) et la bague d'appui (21, 22) au mois par endroits.

12. Dispositif d'étanchéité selon la revendication 11, **caractérisé en ce que** le volume de la fente entre la bague d'étanchéité et la bague d'appuie (21, 22) est entre d'environ 1% et 8% de volume da la bague d'étanchéité.

13. Dispositif d'étanchéité selon l'une des revendications 1 à 12, **caractérisé en ce que** la bague d'appui (5, 21, 22) qui est arrangée dans la rainure (3) du premier élément d'appui est appliquée par sa surface (16) opposée au fond de rainure (8) contre le second élément de construction de façon étanche.

14. Dispositif d'étanchéité selon l'une des revendications 1 à 13, **caractérisé en ce que** la bague d'étanchéité (2) dans sa condition installée est comprimée par d'environ 10 à 20% comparé au diamètre de la bague d'étanchéité dans sa condition démontée.

15. Dispositif d'étanchéité selon l'une des revendications 1 à 14, **caractérisé en ce que** la section transversale de la bague d'étanchéité (2) est circulaire.

16. Dispositif d'étanchéité selon l'une des revendications 1 à 15, **caractérisé en ce que** la bague d'étanchéité (2) est entourée à chacun des deux côtés d'une bague d'appui (5, 21, 22).

17. Dispositif d'étanchéité selon l'une des revendications 1 à 16, **caractérisé en ce que** la bague d'étanchéité (2) faire fonction d'un segment de piston ou d'une bague d'étanchéité arbre.

18. Dispositif d'étanchéité selon la revendication 17, **caractérisé en ce que** le dispositif d'étanchéité comme la garniture étanche de l'arbre est agencé de la sorte que, à une pression hydraulique conformément aux prescriptions du fluide étanche au moyen de joint, la bague d'étanchéité (2) et la bague d'appui (5, 21, 22) sont fixées l'une par rapport à l'autre si l'arbre est tournant.

Fig. 1

Fig. 2

Fig.3

Fig.4

Fig. 5

**EP 1 647 745 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2462586 A